# EUROPÄISCHE PATENTSCHRIFT

(11) **EP 3 331 629 B1**
(45) Veröffentlichungstag und Bekanntmachung des Hinweises auf die Patenterteilung: **18.12.2019**
(21) Anmeldenummer: 16745034.5
(22) Anmeldetag: 06.07.2016
(51) Int. Cl.: B01D 29/00

(54) **FILTER MIT FILTERKERZEN UND VORRICHTUNG ZUM BEFESTIGEN UND ABDICHTEN VON FILTERGEWEBEN UND MEMBRANSCHLÄUCHEN**
FILTER WITH FILTER CANDLE AND SEALING FILTER FABRICS AND DIAPHRAGM HOSES ON FILTER CANDLES
FILTRE AVEC BOUGIES FILTRANTES ET DISPOSITIF DE FIXATION ET D'ÉTANCHÉIFICATION DE TISSUS FILTRANTS ET DE TUYAUX À MEMBRANE

(30) Priorität: 07.08.2015 CH 11412015
(43) Veröffentlichungstag der Anmeldung: 13.06.2018
(73) Patentinhaber: DrM, Dr. Müller AG, 8708 Männedorf (CH)
(72) Erfinder: MENNEKING, Klaus, CH-5622 Waltenschwil (CH)
(74) Vertreter: Herrmann, Peter Johannes
(86) Internationale Anmeldenummer: PCT/CH2016/000100
(87) Internationale Veröffentlichungsnummer: WO 2017/024417

(56) Entgegenhaltungen:
- EP-A1- 2 515 020
- EP-A2- 0 761 278
- CH-A5- 660 224
- DE-A1- 3 326 288

## Beschreibung

Die Erfindung betrifft eine Filtervorrichtung mit einer Filterkerze zum Befestigen und Abdichten von Filtergeweben und Membranschläuchen auf einer Filterkerze, bestehend aus einem Zentralrohr, um welches eine Anzahl von perforierten Stützrohren angeordnet sind

Aus der EP 0 066 921 ist ein Filterelement für einen Druckfilterhehälter der Art bekannt, das aus einem Zentralrohr besteht, welches zur Abstützung der Filtergewebe mit einer anzahl von Stützrohren umgeben ist. Eine Befestigung der über die Rohre vorgesehenen Filtergewebe ist nicht beschrieben.

DE 89 03 445 U beschreibt eine einfache Filterkerze für Kunststoffschmelzen, wobei zwischen einem Kopfteil und einem Basisteil über einen Siebzylinder ein maschenförmiges Filtermittel aufgeschoben und mit einem Klemmring befestigt wird. Die Filterkerze besteht aus einem einzelnen Rohr. Eine Rückspülung ist nicht vorgesehen.

Aus der DE 33 26 288 ist eine weitere Filterkerze für Kunststoffschmelzen bekannt. Hier erfolgt die Abdichtung mittels Konusringen wegen der erforderlichen hohen Drücke über 75 bar. Auch hier ist eine weder ein Kuchenaustrag noch eine Rückspülung vorgesehen. Die bekannten Varianten der Befestigung von Filtergewebeschläuchen und Membranschläuchen auf Filterkerzen mittels Schraub- oder Klemmbriden mit radial hervorstehende Klemmeinrichtungen bereiten immer wieder Schwierigkeiten beim Kuchenaustrag in Kerzenfiltern oder anderen Geräten in welchen diese eingesetzt werden.

Auf den radial hervorstehenden Klemmmechanismen lagert sich Filterkuchen ab, welcher zu Brückenbildung zwischen den einzelnen Filterkerzen führt und das Abreinigen der Filterkerzen einschränkt oder ganz verunmöglicht.

Desweiteren bestehen die Klemmbriden mit hervorstehenden Klemmmechanismen der Regel aus Materialien mit höherer Festigkeit und einem kleineren Materialausdehnungskoeffizienten als das Material auf dem das Filtergewebe fixiert und abgedichtet wird. Dieses führt bei Temperatur- und Druckzyklusbetrieb zu einer Lockerung der Verbindung und resultiert in einem Funktionsausfall der Filterkerze(n). Diese ist besonders störend, da neben Produktionsausfall ein Instandsetzungsaufwand betrieben werden muss.

Aufgabe der Erfindung ist es eine Vorrichtung zu schaffen, welche die beschriebenen Nachteile beseitigt und eine Austragung des Filterkuchens vereinfacht und verbessert wird.

Die Aufgabe wird erfindungsgemäß dadurch gelöst, dass die Abdichtung zwischen dem Filtergewebe oder dem Membranschlauch und dem Stützrohr Befestigungen mittels Klemmringen im oberen und Klemmringen im unteren Teil der Filterkerze vorgesehensind, so dass keine vorstehenden Teile vorhanden, die den Filterkuchen nach Beendigung der Filtration beim Herabfallen behindern.

Es ist vorteilhaft im oberen Teil der Filterkerze wenn die Klemmringe mit einem Gewinde und einem Konus mit Gewinde versehen sind. Es wird eine gleichmässige Abdichtung erreicht.

Ein weitere Vorteil ist, dass unterhalb der unteren Klemmvorrichtung ein
Abschlussdeckel mit einem Gewinde vorgesehen ist. Dadurch wird das Filtergewebe zwischen Konus und Klemmring fixiert.

Ein weiter Vorteil ist, dass am Kerzenoberteil und am Kerzenunterteil in der konischen Dichtfläche eine O-Ringnut mit einem O-Ring vorgesehen ist. Die Nut zur Aufnahme eines O-Rings gibt eine zusätzliche Sicherung für die Abdichtung.

Die Erfindung wird anhand einer Zeichnung näher beschrieben.

Es zeigt:

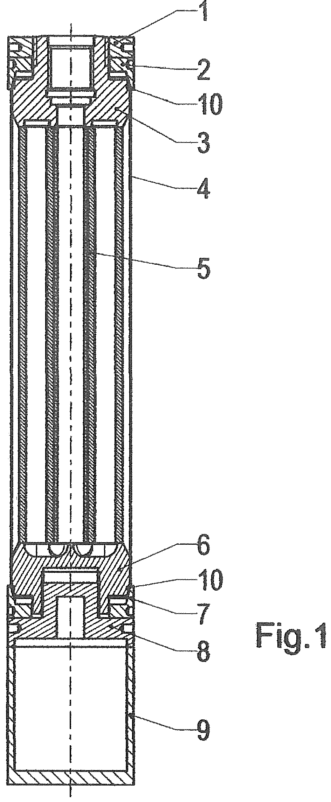

Fig. 1 erfindungsgemässe Filterkerze im Längsschnitt

In der Figur 1 wird mit dem Bezugszeichen 1 ein Klemmring mit einem Gewinde, ein Klemmring 2 mit einem Konus und ein Kerzenoberteil 3, welches mit einem Gegenkonus zum Klemmring 2 und ebenfalls mit einem Gewinde zur Aufnahme von Klemmring 1 versehen ist, beschrieben. Die Klemmringe 1 und 2, sowie das Kerzenoberteil 3 sind im oberen Teil der Filterkerze angeordnet Ein Kerzenkörper 5 dient als Stütze für das Filtergewebe. Im Kerzenunterteil ist ein Klemmring mit Gegenkonus 6 zu Klemmring 7 mit einem Gewinde mit Konus und ein Abschlussdeckel 8 mit Gewinde vorgesehen. Im Bedarfsfall kann der Gegenkonus 6 mit einer Nut 10 für einen O-Ring vorgesehen werden. Am Abschlussdeckel 8 kann eine Kammer 9 vorgesehen werden.

Bei der erfindungsgemässen Filterkerze wird das Filtergewebe oder der Membranschlauch am oberen Teil der Filterkerze zwischen dem Klemmring 2 mit Konus und dem Kerzenoberteit 3 mit Gegenkonus zu Klemmring 2 positioniert. Klemmring 1 mit Gewinde wird mit dem Kerzenoberteil 3 verschraubt und somit der Filtergewebe oder Membranschlauch befestigt und abgedichtet. Im unteren Teil der Filterkerze erfolgt die Befestigung mittels Ktemmring 7 mit Konus und dem Kerzenunterteil 6 mit Gegenkonus zu Klemmring 7. Am Kerzenoberteil 3 und am Kerzenunterteil 6 kann in der konischen Dichtfläche eine Nut zur Aufnahme des O-Rings 10 vorgesehen werden.

Die erfindungsgemässe Abdichtung verhindert Ablagerungen von Filterkuchen auf Bridenschlössern oder anderen radial hervorstehenden Klemmmechanismen, welche den Kuchenaustrag negativ beeinflussen und gewährleistet durch ihre geometrische Gestaltung sowie artgleiche Materialauswahl eine Dauerdichtigkeit der Verbindung und Fixierung des Filtergewebes auch bei Temperatur- und Druckzyklusbetrieb durch Eliminierung der Einwirkung von unterschiedlichen Materialausdehnungskoeffizienten.

## Patentansprüche

1. Filtervorrichtung mit Filterkerze zum Befestigen und Abdichten von Filtergeweben und Membranschläuchen (4) auf einer Filterkerze, bestehend aus einem Zentralrohr, um welches eine Anzahl von perforierten Stützrohren (5) angeordnet sind, **dadurch gekennzeichnet, dass** zwischen dem Filtergewebe oder dem Membranschlauch (4) und dem Stützrohr (5) Befestigungen mittels Klemmringen (1), (2), (3) im oberen und Klemmringen (6), (7), (8) im unteren Teil der Filterkerze vorgesehen sind, so dass keine vorstehenden Teile vorhanden sind, die den Filterkuchen nach Beendigung der Filtration beim Herabfallen behindern.

2. Vorrichtung nach Anspruch 1, **dadurch gekennzeichnet, dass** im oberen Teil der Filterkerze der Klemmring (1) mit einem Gewinde, der Klemmring (2) mit einem Konus und der Klemmring (3) mit einem Gewinde und einem Gegenkonus zu Klemmring (2) versehen ist.

3. Vorrichtung nach Anspruch 1, **dadurch gekennzeichnet, dass** im unteren Teil der Filterkerze der Klemmring (6) mit einem Gewinde und der Klemmring (7) mit einem Konus und der Klemmring (8) mit einem Gewinde versehen ist.

4. Vorrichtung nach den Ansprüchen 1 bis 3, **dadurch gekennzeichnet, dass** unterhalb der unteren Klemmvorrichtung ein Abschlussdeckel (8) mit einem Gewinde vorgesehen ist.

5. Vorrichtung nach Anspruch 4, **dadurch gekennzeichnet, dass** das Kerzenoberteil mit Gewinde und Gegenkonus (3) sowie das Kerzenunterteil mit Gegenkonus (6) mit einer Nut (10) versehen sind.

## Claims

1. A filter device comprising a filter candle for fastening and sealing fitter fabrics and membrane tubes (4) on a fitter candle, consisting of a central tube, around which a number of perforated support tubes (5) is situated, caracterized in that fastenings between the filter fabric on the membrane tube (4) and the support tube (5) are provided by means of clamping rings (1), (2), (3) in the upper part of the filter candle and clamping rings (6), (7), (8) in the lower part of the filter candle, and so there are no protruding parts which impede the filter cake as it drops after the end of filtration.

2. The device according to claim 1, **characterized in that**, in the upper part of the filter candle, the clamping ring (1) is provided with a thread, the clamping ring (2) is provided with a cone, and the clamping ring (3) is provided with a thread and a couter-cone to the clamping ring (2).

3. The device as claimed in claim 1, **characterized in that**, in the lower part of the filter candle, the clamping ring (6) is provided with a thread, and the clamping ring (7) is provided with a cone, and the clamping (8) is provided with a thread.

4. The device as claimed in claims 1 to 3, **characterized in that** an end cap ( ) having a thread is provided below the lower clamping device.

5. The device as claimed in claim 4, **characterized in that** the candle upper part is provided with a thread and a couter-cone (3), and a candle lower part (6) is provided with a counter-cone (6) having a groove (10).

## Revendications

1. Dispositif filtrant avec bougie filtrante pour fixer et rendre étanches des tissus filtrants et des tuyaux à membrane (4) sur une bougie filtrante, composé d'un tube central autour duquel sont disposés un certain nombre de tubes de support perfores (5), **caractérisé en ce qu'**il est prévu entre le tissu filtrant ou le tuyau à membrane (4) et le tube de support (5) des fixations à l'aide de bagues de serrage (1), (2), (3) dans la partie supérieure et des bagues de serrage (6), (7), (8) dans la partie inférieure de la bougie filtrante, de sorte qu'il n'y a pas de parties saillantes gênant le gâteau de filtration quand il tombe, après achèvement de la filtration.

2. Dispositif selon la revendication 1, **caractérisé en ce que** dans la partie supérieure de la bougie filtrante, la bague de serrage (1) est pourvue d'un filetage, la bague de serrage (2) d'un cône et la bague de serrage (3) d'un filetage et d'un cône inverse par rapport à la bague de serrage (2).

3. Dispositif selon la revendication 1, **caractérisé en ce que** dans la partie inférieure de la bougie filtrante, la bague de serrage (6) est pourvue d'un filetage et la bague de serrage (7) d'un cône et la bague de serrage (8) d'un filetage.

4. Dispositif selon l'une des revendications 1 à 3, **caractérisé en ce qu'**au-dessous du dispositif de serrage inférieur est prévu un couvercle de fermeture (8) avec un filetage.

5. Dispositif selon la revendication 4, **caractérisé en ce que** la partie supérieure de bougie est pourvue d'un filetage et d'un cône inverse (3) et la partie inférieure de bougie est pourvue d'un cône inverse (6) avec une rainure (10).
